# EUROPÄISCHE PATENTSCHRIFT

(11) **EP 3 172 740 B1**
(45) Veröffentlichungstag und Bekanntmachung des Hinweises auf die Patenterteilung: **16.09.2020**
(21) Anmeldenummer: 15722949.3
(22) Anmeldetag: 29.04.2015
(51) Int. Cl.: H01B 7/00, H01B 7/08, B60R 16/02

(54) **ELEKTRISCHER FLACHLEITER FÜR KRAFTFAHRZEUGE**
ELECTRICAL RIBBON CONDUCTOR FOR MOTOR VEHICLES
CONDUCTEUR ÉLECTRIQUE PLAT POUR VÉHICULES AUTOMOBILES

(30) Priorität: 31.07.2014 DE 102014011180
(43) Veröffentlichungstag der Anmeldung: 31.05.2017
(73) Patentinhaber: Auto-Kabel Management GmbH, 79688 Hausen i.W. (DE)
(72) Erfinder: LAUSCH, Peter, 47803 Krefeld (DE); MARTENS, Sebastian, 47638 Straelen (DE)
(74) Vertreter: Cohausz & Florack
(86) Internationale Anmeldenummer: PCT/EP2015/059267
(87) Internationale Veröffentlichungsnummer: WO 2016/015883

(56) Entgegenhaltungen:
- DE-A1-102006 050 705
- DE-A1-102008 003 332
- US-A1- 2007 090 494
- US-A1- 2014 027 153

## Beschreibung

Die Erfindung betrifft einen elektrischen Flachleiter für Kraftfahrzeuge mit einem Flachleiterkern aus leitfähigem Flachleitermaterial und mit einer den Flachleiterkern ummantelnden Isolierung aus einem Isolierstoff, wobei die Höhe des Flachleiterkerns geringer ist als die Breite des Flachleiterkerns.

Derartige elektrische Flachleiter finden zum Beispiel in der Kraftfahrzeugindustrie Anwendung als Alternative zu Rundleitern. Durch die flache Geometrie der Flachleiter können diese beispielsweise in Fällen eingesetzt werden, in denen wenig Raum zur Installation zur Verfügung steht, wie zum Beispiel hinter einer Verkleidung im Innenraum eines Kraftfahrzeugs.

Ein solcher Flachleiter umfasst einen leitfähigen Flachleiterkern, der sich in Längsrichtung des Flachleiters erstreckt und dessen Höhe (im Querschnitt) geringer ist als dessen Breite. Der Flachleiterkern ist mit einer Isolierung ummantelt, um unerwünschte elektrische Kontaktierungen des Flachleiterkerns mit anderen leitenden Komponenten in der Umgebung des Flachleiters zu vermeiden.

Solche Flachleiter werden vor ihrer Montage häufig mittels Biegewerkzeugen in eine Form gebracht, die an den gewünschten Verlauf des Flachleiters im Kraftfahrzeug angepasst ist. Zum Umformen eines solchen Flachleiters kann beispielsweise ein Biegewerkzeug von Außen an eine Seite des Flachleiters angelegt und eine Kraft auf diese Seite des Flachleiters ausgeübt werden, um eine mechanische Biegeumformung des Flachleiters, insbesondere des Flachleiterkerns, zu bewirken.

Bei derartigen Umformvorgängen besteht das Problem, dass es in Folge der auf den Flachleiter wirkenden Kräfte zu Beschädigungen der Isolierung des Flachleiters kommen kann, insbesondere bei Verwendung vergleichsweise weicher Isolierstoffe wie beispielsweise Polyvinylchlorid (PVC). Das Risiko einer Beschädigung der Isolierung ist besonders groß, wenn die Verformung auf einer Schmalseite des Flachleiters erfolgt.

Um eine Beschädigung der Isolierung des Flachleiters zu vermeiden, könnten die Biegeprozesse dahingehend verändert werden, dass die Geschwindigkeiten reduziert werden, mit denen die Biegewerkzeuge auf die Flachleiter wirken, so dass die auf die Isolierung wirkenden Kräfte reduziert werden. Dies führt jedoch zu höheren Taktzeiten bei den Biegeprozessen, so dass die Fertigungskosten von 3D-gebogenen Flachleitungen erhöht würden. Abhängig von der Maschinenauslastung könnte diese Vorgehensweise sogar die Anschaffung weiterer Biegevorrichtungen erforderlich machen, so dass zudem Investitionskosten anfallen.

Aus der DE 10 2006 050 705 A1 ist eine Kraftfahrzeugbatterieleitung mit einem Flachleiter bekannt. Die US 2007/0090494 A1 offenbart einen isolierten elektrischen Leiter mit rechteckigem Querschnitt, wobei in den Eckbereichen die Kantenradien möglichst klein gewählt werden.

Vor diesem Hintergrund liegt der vorliegenden Erfindung die Aufgabe zugrunde, einen elektrischen Flachleiter zur Verfügung zu stellen, der eine verbesserte Beständigkeit insbesondere gegenüber Umformungen des Flachleiters mittels Biegewerkzeugen aufweist.

Diese Aufgabe wird gemäß Anspruch 1 bei einem elektrischen Flachleiter für Kraftfahrzeuge mit einem Flachleiterkern aus elektrisch leitfähigem Flachleitermaterial und mit einer den Flachleiterkern ummantelnden Isolierung aus einem Isolierstoff, wobei die Höhe des Flachleiterkerns geringer ist als die Breite des Flachleiterkerns, wobei der Flachleiterkern mindestens eine Schmalseite aufweist, die die Breite des Flachleiterkerns zu einer Seite hin begrenzt und wobei die mindestens eine Schmalseite des Flachleiterkerns zumindest abschnittsweise über die Länge des Flachleiters eine Teilfläche aufweist, deren Kontur im Querschnitt des Flachleiterkerns eine gerade Strecke bildet, die sich über einen Teil der Höhe des Flachleiterkerns erstreckt, nach einer Lehre der vorliegenden Erfindung dadurch gelöst, dass der Flachleiter mindestens eine Biegung um die mindestens eine Schmalseite des Flachleiterkerns aufweist und dass sich die gerade Strecke über mindestens 75 % und über maximal 90% der Höhe des Flachleiterkerns erstreckt.

Es wurde erkannt, dass auf diese Weise ein elektrischer Flachleiter bereitgestellt werden kann, der eine verbesserte Beständigkeit insbesondere gegenüber Umformungen des Flachleiters mittels Biegewerkzeugen aufweist.

Der Flachleiterkern besteht aus leitfähigem Flachleitermaterial. Bei dem Flachleitermaterial kann es sich vorzugsweise um Aluminium oder eine Aluminiumlegierung handeln, da diese bei geringem spezifischem Gewicht eine relativ hohe Leitfähigkeit aufweisen und sich so vorteilhaft in Bezug auf den Kraftfahrzeugleichtbau auswirken. Alternativ kommen jedoch auch andere Metalle oder metallische Legierungen wie zum Beispiel Kupferlegierungen als Flachleitermaterial in Frage.

Als Isolierstoff kann vorzugsweise ein Kunststoff verwendet werden, insbesondere ein weicher Kunststoff mit einer Microhärte von maximal 90, insbesondere im Bereich von 50 - 90 (bestimmt nach DIN EN 48). Beispiele für derartige Isolierstoffe sind beispielsweise Polyvinylchlorid (PVC), Polyurethan (PUR) oder Silikon. Weiche Kunststoffe sind bei Biegeumformungen besonderes beschädigungsanfällig, so dass sich die Vorteile der Erfindung besonders bei Flachleitern zeigen, die eine Isolierung aus weichem Kunststoff aufweisen.

Bei dem elektrischen Flachleiter kann es sich insbesondere um eine Energieleitung handeln, d.h. um eine Leitung deren wesentliche Aufgabe - anders als bei Datenleitungen - in der Versorgung mit elektrischer Energie besteht. Der elektrische Flachleiter kann beispielsweise als Kraftfahrzeugbatterieleitung ausgebildet sein. Vorzugsweise ist der elektrische Flachleiter für eine Stromstärke von mindestens 100 A, vorzugsweise mindestens 200 A, insbesondere mindestens 400 A ausgelegt. Der Flachleiterkern weist vorzugsweise einen Querschnitt von mindestens 10 mm², weiter bevorzugt von mindestens 16 mm² auf. Insbesondere kann der Flachleiterkern einen Querschnitt im Bereich von 10 mm² bis 240 mm², vorzugsweise 16 mm² bis 160 mm² aufweisen. Der Isolierstoff des Flachleiters weist vorzugsweise einen spezifischen Isolationswiderstand von mindestens 10⁹ Ω·mm auf. Die Durchschlagsspannung der Isolierung liegt vorzugsweise bei mehr als 5 kV. Die Wandstärke der Isolierung liegt bevorzugt in einem Bereich zwischen 0,5 mm und 1,5 mm.

Die Höhe des Flachleiterkerns ist geringer als die Breite des Flachleiterkerns. Unter der Höhe des Flachleiterkerns wird die größte Ausdehnung des Flachleiterkerns in der Höhe bezogen auf einen Querschnitt des Flachleiterkerns verstanden. Unter der Breite des Flachleiterkerns wird entsprechend die größte Ausdehnung des Flachleiterkerns in der Breite bezogen auf einen Querschnitt des Flachleiterkerns verstanden. Unter einem Querschnitt des Flachleiterkerns wird der Schnitt der Flachleiterkerns mit einer Querschnittsebene verstanden, die senkrecht zur lokalen Längserstreckungsrichtung des Flachleiters verläuft.

Der Flachleiterkern weist mindestens eine Schmalseite auf, die die Breite des Flachleiterkerns (im Querschnitt) zu einer Seite hin begrenzt. Unter der Schmalseite wird also eine äußere Seite des Flachleiterkerns verstanden, durch die der Querschnitt des Flachleiterkerns seitlich in Richtung seiner Breite begrenzt wird. Die Seiten des Flachleiterkerns, die den Flachleiterkern in Bezug auf seine Höhe begrenzen werden vorliegend als Breitseiten bezeichnet. Da die Höhe eines Flachleiterkerns geringer ist als dessen Breite, sind entsprechend auch die Schmalseiten schmaler als die Breitseiten des Flachleiterkerns.

Die mindestens eine Schmalseite des Flachleiterkerns weist zumindest abschnittsweise über die Länge des Flachleiters eine Teilfläche auf. Die Teilfläche erstreckt sich also zumindest über einen Abschnitt in Längsrichtung des Flachleiters. In Längsrichtung des Flachleiters kann die Teilfläche gerade oder gekrümmt ausgebildet sein. Die Kontur dieser Teilfläche bildet im Querschnitt des Flachleiterkerns eine gerade Strecke. Unter der Kontur der Teilfläche im Querschnitt wird die Schnittlinie der Teilfläche mit einer Querschnittsebene des Flachleiterkerns verstanden. In der Ebene senkrecht zur lokalen Längserstreckungsrichtung des Flachleiters weist die Teilfläche also keine Krümmungen auf.

Die gerade Strecke erstreckt sich über einen Teil der Höhe des Flachleiterkerns. Damit erstreckt sich die gerade Strecke insbesondere nicht über die gesamte Höhe des Flachleiterkerns. Erfindungsgemäß erstreckt sich die gerade Strecke über maximal 90 % der Höhe des Flachleiterkerns. Erstreckt sich die gerade Strecke über mehr als 90 % oder sogar mehr als 95 % des Flachleiterkerns, führt dies zu scharfen Kanten an den Rändern der Teilfläche, so dass diese gleichsam als Schneidkanten auf die Isolierung beim Biegeprozess wirken und diese so beschädigen könnten.

Vorzugsweise erstreckt sich die gerade Strecke über einen Teil der Höhe des Flachleiterkerns, der mindestens um 0,6 mm, vorzugsweise um mindestens 1,0 mm kleiner ist als die Höhe des Flachleiterkerns. Insbesondere verbleiben zur vollen Höhe des Flachleiterkerns beidseitig der geraden Strecke jeweils mindestens 0,3 mm, vorzugsweise mindestens 0,5 mm. Bei einem im Wesentlichen rechteckigen Querschnitt des Flachleiterkerns mit abgerundeten Ecken können die Ecken hierzu beispielsweise einen Rundungsradius von mindestens 0,3 mm, vorzugsweise mindestens 0,5 mm aufweisen. Auf diese Weise wird verhindert, dass der Flachleiter an den Rändern der Teilfläche zu scharfe Kanten aufweist.

Die gerade Strecke erstreckt sich weiterhin über mindestens 75 % der Höhe des Flachleiterkerns. Damit erstreckt sich die Teilfläche der Schmalseite in einer Richtung quer zur Längserstreckungsrichtung des Flachleiters in gerader Weise über mindestens 75 % der Höhe des Flachleiterkerns. Durch das Vorsehen einer derartigen Teilfläche, kann eine verbesserte Beständigkeit des elektrischen Flachleiters, insbesondere bei einem Biegevorgang des Flachleiters erreicht werden.

Im Rahmen der vorliegenden Erfindung wurde nämlich erkannt, dass es beim Biegen von isolierten Flachleitungen aufgrund der zum Teil hohen Biegekräfte und damit hoher Flächenpressung durch das Biegewerkzeug auf die Isolierung des Flachleiters zur Beschädigung der Isolierung kommen kann. Gerade beim Einsatz vergleichsweise dünner Flachleitungen mit einer Höhe von gleich oder weniger als 2,5 mm kann der Druck beim Biegen auf eine Schmalseite des Flachleiters so groß werden, dass die Isolierung durch die entsprechende Schmalseite des Flachleiterkerns beschädigt oder sogar durchtrennt wird. Hierbei wirkt der Flachleiterkern im Bereich der Schmalseite wie eine Schneidkante und führt zu einer hohen Druckbelastung auf die Isolierung, die letztlich zu deren Versagen führt.

Indem eine Teilfläche vorgesehen wird, deren Kontur im Querschnitt des Flachleiterkerns eine gerade Strecke bildet, die sich über mindestens 75 % der Höhe des Flachleiterkerns erstreckt, wird erreicht, dass beim Biegen des Flachleiters um die betreffende Schmalseite eine größere Auflagefläche des Flachleiterkerns für das Biegewerkzeug zur Verfügung gestellt wird. Auf diese Weise verteilt sich die Kraft des Biegewerkzeugs auf eine größere Fläche der Schmalseite, so dass es zu geringeren Biegedrücken, d.h. geringeren lokalen Flächenpressungen im Bereich der Schmalseite kommt. Hierdurch ist ein materialschonender Biegeprozess möglich, da die geringeren auf die Isolierung wirkenden Kräfte nicht mehr eine Zerstörung der Isolierung bewirken.

Es wurde insbesondere erkannt, dass sich die gerade Strecke zu diesem Zweck über mindestens 75 % der Höhe des Flachleiterkerns erstrecken sollte. Bei kürzeren geraden Strecken wäre die verbleibende Auflagefläche im Bereich der Schmalseite im Verhältnis zur gesamten Schmalseite so gering, dass die Schmalseite des Flachleiterkerns gleichsam als Schneidkante auf die Isolierung wirken und diese beschädigen würde.

Im Folgenden werden bevorzugte Ausführungsformen des zuvor genannten Flachleiters beschrieben. Die einzelnen Ausführungsformen können grundsätzlich beliebig miteinander kombiniert werden.

Bei einer Ausführungsform weist der Flachleiterkern mindestens eine Breitseite auf, die die Höhe des Flachleiterkerns zu einer Seite hin begrenzt, und die Teilfläche der mindestens einen Schmalseite des Flachleiterkerns verläuft im Wesentlichen senkrecht zu der mindestens einen Breitseite des Flachleiterkerns. Auf diese Weise kann durch horizontale Ausrichtung der Breitseite beispielsweise auf einer Unterlage eine im Wesentlichen vertikale Ausrichtung der Schmalseite und so eine einfache Ausrichtung der Schmalseite zu einem Biegewerkzeug erreicht werden. Unter dem Begriff "im wesentlichen senkrecht" wird vorliegend verstanden, dass die entsprechenden Flächen in einem Winkelbereich von 80° - 100°, vorzugsweise von 85° - 95° zueinander verlaufen.

Bei einer weiteren Ausführungsform erstreckt sich die Teilfläche der mindestens einen Schmalseite im Wesentlichen über die gesamte Länge des Flachleiters. Auf diese Weise kann der Flachleiter praktisch an einer beliebigen Stelle um die Schmalseite gebogen werden, ohne dass es zu einer übermäßigen Belastung der Isolierung kommt.

Bei einer weiteren Ausführungsform weist der Flachleiterkern zwei Schmalseiten und zwei Breitseiten und einen im Wesentlichen rechteckigen Querschnitt auf. Die beiden schmalen Seiten des im Wesentlichen rechteckigen Querschnitts, die den Flachleiterkern in der Breite begrenzen, werden also als Schmalseiten und die breiten Seiten, die den Flachleiterkern in der Höhe begrenzen, werden als Breitseiten bezeichnet. Derartige Flachleiter sind in der Praxis vielfältig einsetzbar. Insbesondere erleichtert eine solche Flachleiterkerngeometrie das Biegen des Flachleiters in zwei zueinander senkrechte Richtungen, nämlich einerseits in Richtung einer Schmalseite und andererseits in Richtung einer Breitseite, so dass komplex, insbesondere dreidimensional geformte Flachleiter herstellbar sind.

Bei einer weiteren Ausführungsform weist der Flachleiterkern einen im Wesentlichen rechteckigen Querschnitt mit abgerundeten Ecken auf. Durch einen solchen Querschnitt weisen die Schmalseiten anstelle einer scharfen Kante einen glatten Übergang zu den angrenzenden Breitseiten auf. Auf diese Weise kann eine Beschädigung der Isolierung durch scharfe Kanten an den Schmalseiten vermieden werden. Vorzugsweise betragen die Rundungsradien der abgerundeten Ecken an mindestens einer Schmalseite des Flachleiterkerns jeweils maximal ein Achtel der Höhe des Flachleiterkerns. Auf diese Weise wird erreicht, dass die abgerundeten Ecken an einer Schmalseite insgesamt höchstens ein Viertel der Höhe des Flachleiterkerns einnehmen. Die zwischen den Rundungsradien verlaufende gerade Strecke im Querschnitt des Flachleiterkerns erstreckt sich daher über mindestens 75 % der Höhe des Flachleiterkerns und bildet damit die zuvor beschriebene, ausreichend große Teilfläche der Schmalseite.

Bei einer Höhe des Flachleiterkerns im Bereich von 1,5 mm bis 2,5 mm, vorzugsweise bis 2 mm liegen die Rundungsradien vorzugsweise im Bereich von 0,2 mm bis 0,3 mm bzw. bis 0,25 mm. Bei einer weiteren Ausführungsform betragen die Rundungsradien vorzugsweise mindestens 0,3 mm, insbesondere 0,5 mm.

Bei einer weiteren Ausführungsform weist die Isolierung zumindest abschnittsweise über die Länge des Flachleiters an mindestens einer Seite des Flachleiterkerns eine größere Wandstärke aufweist als an mindestens einer anderen Seite des Flachleiterkerns.

Es wurde erkannt, dass durch die Verstärkung der Isolierungswandstärke an einer Seite des Flachleiterkerns die Isolierung an dieser Seite größeren mechanischen Belastungen standhalten kann, wie sie insbesondere bei einer Biegeumformung des Flachleiters um diese Seite auftreten. Gegenüber einer Erhöhung der gesamten Isolierungswandstärke des Flachleiters hat diese lokale Wandstärkenerhöhung zudem den Vorteil einer Isolierstoff- und Bauraumersparnis.

Die größere Wandstärke der Isolierung an mindestens einer Seite des Flachleiterkerns erstreckt sich zumindest abschnittsweise über die Länge des Flachleiters, d.h. in Richtung der Längserstreckung des Flachleiters. Vorzugsweise erstreckt sich die größere Wandstärke mindestens über einen Abschnitt über die Länge des Flachleiters, in dem der Flachleiter um die Seite gebogen ist oder für eine solche Biegung vorgesehen ist.

Im Folgenden werden bevorzugte Ausführungsformen des zuvor genannten Flachleiters beschrieben. Die einzelnen Ausführungsformen können grundsätzlich auch beliebig miteinander kombiniert werden.

Bei einer Ausführungsform weist der Flachleiterkern mindestens eine Schmalseite auf, die die Breite des Flachleiterkerns zu einer Seite hin begrenzt, weist der Flachleiterkern mindestens eine Breitseite auf, die die Höhe des Flachleiterkerns zu einer Seite hin begrenzt, und weist die Isolierung an der mindestens einen Schmalseite des Flachleiterkerns eine größere Wandstärke auf als an der mindestens einen Breitseite des Flachleiterkerns. Insbesondere beim Biegen um eine Schmalseite des Flachleiterkerns wirken hohe Flächenkräfte auf die Isolierung, so dass eine Verdickung der Wandstärke der Isolierung besonders an einer Schmalseite vorteilhaft für eine verbesserte Beständigkeit gegenüber derartigen mechanischen Biegeumformungen ist.

Bei einer weiteren Ausführungsform ist die Wandstärke der Isolierung an der mindestens einen Seite des Flachleiterkerns mindestens %, vorzugsweise mindestens 15 %, weiter bevorzugt mindestens 20 %, insbesondere mindestens 25 % größer als an der mindestens einen anderen Seite des Flachleiterkerns. Es wurde festgestellt, dass durch eine derartige Erhöhung der Wandstärke der Isolierung eine signifikante Verstärkung der Isolierung im Bereich der mindestens einen Seite erreicht werden kann, so dass diese höheren Belastungen widerstehen kann.

Bei einer weiteren Ausführungsform ist die Wandstärke der Isolierung an der mindestens einen Seite des Flachleiterkerns höchstens 100 %, vorzugsweise höchstens 75 %, insbesondere höchstens 50 % größer als an der mindestens einen anderen Seite. Auf diese Weise weist der Flachleiter einen kompakten Bauraum auf.

Bei einer weiteren Ausführungsform weist die Isolierung im Wesentlichen über die gesamte Länge des Flachleiters an der mindestens einen Seite des Flachleiterkerns eine größere Wandstärke auf als an der mindestens einen anderen Seite des Flachleiterkerns. Auf diese Weise kann der Flachleiter praktisch an einer beliebigen Stelle um die mindestens eine Seite, insbesondere um eine Schmalseite, gebogen werden, ohne dass es zu einer übermäßigen Belastung der Isolierung kommt.

Bei einer weiteren Ausführungsform weist der Flachleiterkern zwei Schmalseiten und zwei Breitseiten und einen im Wesentlichen rechteckigen Querschnitt auf. Die beiden schmalen Seiten des im wesentlichen rechteckigen Querschnitts, die den Flachleiterkern in der Breite begrenzen, werden also als Schmalseiten und die breiten Seiten, die den Flachleiterkern in der Höhe begrenzen, werden als Breitseiten bezeichnet. Derartige Flachleiter sind in der Praxis vielfältig einsetzbar. Insbesondere erleichtert eine solche Flachleiterkerngeometrie das Biegen des Flachleiters in zwei zueinander senkrechte Richtungen, nämlich einerseits in Richtung einer Schmalseite und andererseits in Richtung einer Breitseite, so dass komplex geformte Flachleiter herstellbar sind. Vorzugsweise weist die Isolierung an mindestens einer, vorzugsweise an beiden Schmalseiten eine größere Wandstärke auf als an den beiden Breitseiten des Flachleiterkerns.

Bei einer weiteren Ausführungsform des Flachleiters gemäß der Lehre der vorliegenden Erfindung beträgt die Höhe des Flachleiterkerns maximal 3,5 mm, vorzugsweise maximal 2,5 mm. Flachleiter mit derart dünnen Flachleiterkernen gewinnen insbesondere als Energieversorgungsleitungen immer mehr an Bedeutung, da nicht nur die Batterieleitung als Flachleitung ausgebildet werden kann, sondern Flachleitungen auch für weitere Hochstromleitungen wie zum Beispiel die so genannten EPS-Leitungen (zur Versorgung der Electronic Power Steering) oder Leitungen für die Motorsteuerung (Common Rail, variabler Ventiltrieb), Wank-Stabilisierung oder ähnliches eingesetzt werden können. Gleichzeitig tritt bei diesen geringen Dicken das Problem einer Isolierungsbeschädigung beim Biegen an den Schmalkanten besonders häufig auf, so dass die Lehre der vorliegenden Erfindung besonders für derartige Flachleiter vorteilhaft sind. Die Höhe des Flachleiterkerns beträgt weiterhin vorzugsweise mindestens 1,5 mm. Dünnere Flachleiterkerne sind zu biegeschlaff und sind nicht mehr ohne Probleme handhabbar.

Die Breite des Flachleiterkerns beträgt vorzugsweise mindestens 5 mm, insbesondere mindestens 6,5 mm. Auf diese Weise kann ein ausreichender Querschnitt des Flachleiterkerns zur Verfügung gestellt werden, so dass der Flachleiter als Energieleitung eingesetzt werden kann. Für die Leitung hoher Ströme, wie zum Beispiel bei dem Einsatz als Batterieleitung, kann die Breite des Flachleiterkerns auch mindestens 8 mm, 11 mm oder sogar mindestens 14 mm, 20 mm oder 30 mm betragen.

Bei einer weiteren Ausführungsform des Flachleiters gemäß der Lehre der vorliegenden Erfindung liegt das Verhältnis der Höhe des Flachleiterkerns zur Breite des Flachleiterkerns zwischen 1:2 und 1:15, insbesondere zwischen 1:5 und 1:10. Mit diesen Verhältnissen werden bei einer geringen Höhe des Flachleiterkerns für die im Kraftfahrzeug zu leitenden Ströme ausreichende Flachleiterquerschnitte erzielt. Ein geringeres Verhältnis der Höhe zur Breite als 1:2 würde zu viel Bauraum in der Höhe und ein größeres Verhältnis als 1:15 würde aufgrund des ungünstigen Querschnitts bzw. Oberflächenverhältnisses zu viel Isolationsmaterial benötigen und wäre in der flachen Ebene nur mit relativ großen Biegeradien verlegbar.

Erfindungsgemäß weist der Flachleiter mindestens eine Biegung um eine Schmalseite des Flachleiterkerns auf. Unter einer Biegung um eine Schmalseite des Flachleiterkerns wird verstanden, dass die Schmalseite entlang der Längserstreckung des Flachleiters gekrümmt ist, d.h. zumindest eine Richtungsänderung aufweist. Die Biegung erfolgt vorzugsweise um eine Biegeachse, die im Wesentlichen parallel zur Richtung der Höhe des Flachleiters verläuft. Bei Biegungen um eine Schmalseite tritt das Problem der Beschädigung der Isolierung aufgrund der geringeren Ausdehnung der Schmalseiten besonders häufig auf, so dass die Lehre der vorliegenden Erfindung besonders für Flachleiter vorteilhaft sind, die in dieser Richtung gebogen werden sollen bzw. gebogen sind.

Bei einer weiteren Ausführungsform des Flachleiters gemäß der Lehre der vorliegenden Erfindung weist die Isolierung zumindest abschnittsweise über die Länge des Flachleiters an mindestens einer Seite des Flachleiterkerns, insbesondere an der mindestens einen Schmalseite, eine größere Wandstärke auf als an mindestens einer anderen Seite des Flachleiterkerns, insbesondere an mindestens einer Breitseite.

Durch das Vorsehen einer Teilfläche, deren Kontur sich in Form einer geraden Strecke über mindestens 75% der Höhe des Flachleiterkerns erstreckt, kann derselbe Flachleiterkernquerschnitt bei einer geringeren Flachleiterkernbreite erreicht werden als bei Flachleiterkernen, bei denen sich die entsprechende gerade Strecke über weniger als 75 % der Flachleiterkernhöhe erstreckt.

Weist der Flachleiterkern beispielsweise einen im Wesentlichen rechteckigen Querschnitt mit abgerundeten Ecken auf, so kann durch die Reduzierung der Rundungsradien der abgerundeten Ecken eine Erhöhung der Querschnittsfläche bei konstanter Breite bzw. eine Reduzierung der Flachleiterkernbreite bei konstanter Querschnittsfläche erreicht werden.

Durch die Reduzierung der Flachleiterkernbreite wird Bauraum frei, der vorteilhaft dazu verwendet werden kann, die Wandstärke der Isolierung in diesem Bereich entsprechend zu erhöhen, um eine weitere Verbesserung der Stabilität des Flachleiters im Bereich der Schmalseiten zu erreichen. Auf diese Weise wirken die Merkmale der vorliegenden Erfindung zur Erhöhung der Stabilität des Flachleiters synergetisch vorteilhaft zusammen, da eine bauraumneutrale, jedoch zum Biegen optimierte Flachleitung zur Verfügung gestellt werden kann.

Weitere Merkmale und Vorteile der vorliegenden Erfindung werden im Folgenden anhand von Ausführungsbeispielen beschrieben, wobei auf die beigefügten Zeichnungen Bezug genommen wird.

In den Zeichnungen zeigen
- Fig. 1: einen ersten elektrischen Flachleiter aus dem Stand der Technik im Querschnitt,
- Fig. 2: einen zweiten elektrischen Flachleiter aus dem Stand der Technik im Querschnitt,
- Fig. 3: ein Ausführungsbeispiel eines elektrischen Flachleiters gemäß der Lehre der vorliegenden Erfindung im Querschnitt,
- Fig.4: ein zweites Ausführungsbeispiel eines elektrischen Flachleiters gemäß der Lehre der vorliegenden Erfindung im Querschnitt,
- Fig. 5: ein Ausführungsbeispiel eines elektrischen Flachleiters gemäß der Lehre der vorliegenden Erfindung im Querschnitt,
- Fig. 6: ein Ausführungsbeispiel eines elektrischen Flachleiters gemäß der Lehre der vorliegenden Erfindung im Querschnitt und
- Fig. 7: den umgeformten elektrischen Flachleiter aus Fig. 6 in perspektivischer Darstellung.

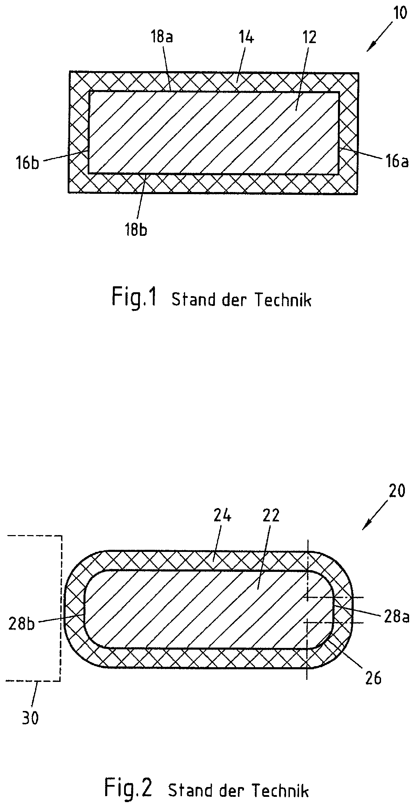

Fig. 1 zeigt einen ersten elektrischen Flachleiter 10 aus dem Stand der Technik im Querschnitt. Der Flachleiter weist einen Flachleiterkern 12 aus leitfähigem Flachleitermaterial wie zum Beispiel einer Aluminiumlegierung und eine den Flachleiterkern 12 ummantelnde Isolierung 14 aus einem Isolierstoff wie zum Beispiel Polyvinylchlorid auf.

Der Flachleiterkern 12 hat einen rechteckigen Querschnitt, der in seiner Breite von zwei Schmalseiten 16a-b und in seiner Höhe von zwei Breitseiten 18a-b begrenzt wird. Die Höhe des Flachleiterkerns 12 ist damit geringer als dessen Breite. Bei einem rechteckigen Querschnitt stoßen die Schmalseiten 16a-b und Breitseiten 18a-b des Flachleiterkerns 12 jeweils rechtwinklig aufeinander, so dass der Flachleiterkern 12 recht scharfe Kanten aufweist. Diese scharfen Kanten können die Isolierung 14 stark beanspruchen, so dass es insbesondere bei einer Biegeumformung des Flachleiters häufig zu einer Beschädigung der Isolierung 14 kommt.

Im Stand der Technik werden auch Flachleiter wie der in Fig. 2 dargestellte Flachleiter 20 eingesetzt. Der Flachleiter 20 weist ebenfalls einen Flachleiterkern 22 auf, der mit einer Isolierung 24 ummantelt ist. Die Höhe des Flachleiters 20 beträgt beispielsweise 2,5 mm und die Breite 25 mm, so dass der Flachleiter 20 ein Höhe-Breite-Verhältnis von 1:10 aufweist. Der Flachleiterkern 22 weist einen im Wesentlichen rechteckigen Querschnitt mit abgerundeten Ecken 26 auf, so dass der Flachleiterkern 22 entsprechend sich in Längserstreckungsrichtung des Flachleiters 20 erstreckende abgerundete Kanten aufweist, die die Isolierung 24 weniger stark belasten als die scharfen Kanten des Flachleiterkerns 12. Der Übergang zwischen den geraden Seiten und den abgerundeten Kanten im Querschnitt des Flachleiterkerns 22 ist in Fig. 2 durch strichpunktierte Linien angedeutet.

Es hat sich jedoch herausgestellt, dass die abgerundeten Ecken 26 ebenfalls zu Problemen führen können, und zwar beim Biegeumformen des Flachleiters 20 um eine Schmalseite 28a-b des Flachleiterkerns 22. Durch die abgerundeten Ecken reduziert sich nämlich die Anlagefläche, mit der der Flachleiter 20 an einem zum Biegeumformen eingesetzten Biegewerkzeug 30 anliegt. Die beim Biegeumformen vom Biegewerkzeug 30 auf den Flachleiter 20 ausgeübten Kräfte werden dadurch auf einer relativ kleinen Fläche übertragen, so dass es dort zu sehr hohen Biegedrücken kommt, wodurch die Isolierung 24 in diesem Bereich beschädigt werden kann. Insbesondere kann die Form der Schmalseite 28b aufgrund der abgerundeten Ecken 26 wie eine Schneide auf die Isolierung 24 wirken. Bei Flachleiterkernen mit einer Höhe von 2 mm werden teilweise Rundungsradien der abgerundeten Ecken von 0,5 mm und mehr verwendet, so dass die geraden Strecken der Schmalseiten 28a-b auf 1 mm oder weniger reduziert werden, die dann wie eine Schneide auf die Isolierung 24 wirken.

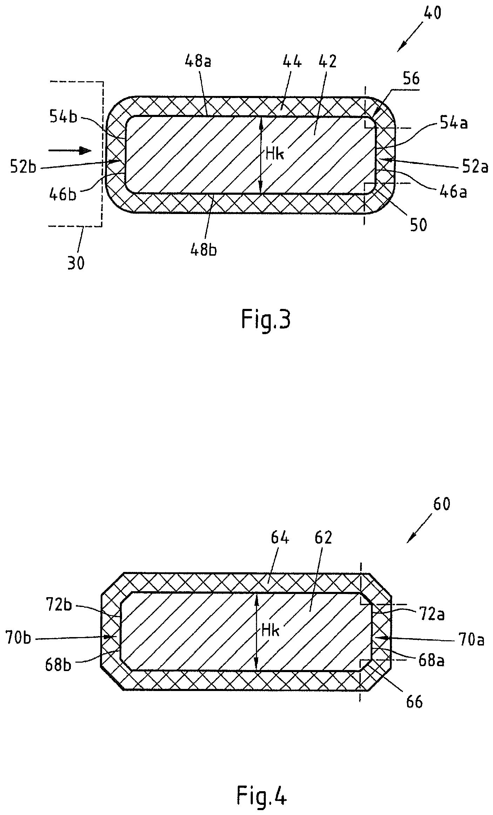

Fig. 3 zeigt nun ein erstes Ausführungsbeispiel eines Flachleiters 40 gemäß der Lehre der vorliegenden Erfindung. Der Flachleiter 40 weist einen Flachleiterkern 42 aus leitfähigem Flachleitermaterial und eine den Flachleiterkern 42 ummantelnde Isolierung 44 aus einem Isolierstoff auf.

Der Querschnitt des Flachleiterkerns 42 ist im Wesentlichen rechteckig ausgebildet mit zwei die Breite des Flachleiterkerns 42 begrenzenden Schmalseiten 46a-b und zwei die Höhe des Flachleiterkerns begrenzenden Breitseiten 48a-b. Die Ecken 50 des Flachleiterkerns 42 sind wie bei dem Flachleiter 20 gerundet.

An den Schmalseiten 46a-b weist der Flachleiterkern 42 jeweils eine Teilfläche 52a-b auf, deren Konturen in dem in Fig. 3 dargestellten Querschnitt jeweils eine gerade Strecke 54a-b bilden. Die geraden Strecken 54a-b grenzen nach oben und unten jeweils an die gekrümmten Konturen der abgerundeten Ecken 50 und erstrecken sich daher nur über einen Teil der Höhe Hk des Flachleiterkerns 42. Die Grenzen zwischen der geraden Strecke 46a und den Konturen der angrenzenden Ecken 50 sind in Fig. 3 durch horizontale strichpunktierte Linien angedeutet.

Der Flachleiter 40 unterscheidet sich vom Flachleiter 20 nun dadurch, dass sich die geraden Strecken 54a-b jeweils über mindestens 75 % der Höhe Hk des Flachleiterkerns 42 erstreckt. Zu diesem Zweck sind die Rundungsradien 56 der gerundeten Kanten 50 so bemessen, dass sie jeweils maximal einem Achtel der Höhe Hk des Flachleiterkerns entsprechen. Bei einer Höhe des Flachleiterkerns von 2 mm könnten beispielsweise Rundungsradien von 0,2 mm gewählt werden. Damit weist die gerade Strecke 54a-b eine Höhe von 1,6 mm und damit von 80 % der Höhe des Flachleiterkerns 42 auf.

Auf diese Weise werden mit den Teilflächen 52a-b ausreichend große Anlageflächen für ein Biegewerkzeug 30 zur Verfügung gestellt, so dass die von dem Biegewerkzeug 30 auf den Flachleiter 40 übertragenen Kräfte über eine ausreichend große Fläche verteilt werden und eine lokale Überlastung der Isolierung 44 vermieden werden kann. Insbesondere kann die Schneiden-Wirkung des Flachleiterkerns 42, wie sie bei dem Flachleiter 20 auftritt, durch die ausreichende Dimensionierung der Teilflächen 52a-b verhindert werden.

Ein alternatives Ausführungsbeispiel eines Flachleiters 60 nach der Lehre der vorliegenden Erfindung ist in Fig. 4 dargestellt.

Der Flachleiter 60 unterscheidet sich vom Flachleiter 40 dadurch, dass der Flachleiterkern 62 des Flachleiters 60 einen im Wesentlichen rechteckigen Querschnitt mit gefasten Ecken 66 aufweist, so dass sich insgesamt im Prinzip eine achteckige Querschnittsform ergibt. Angrenzend an die gefasten Ecken 64 weisen die Schmalseiten 68a-b des Flachleiterkerns 62 Teilflächen 70a-b auf, deren Kontur im Querschnitt in Fig. 4 gerade Strecken 72a-b bildet.

Die gefasten Ecken 64 erstrecken sich jeweils über maximal ein Achtel der Höhe Hk des Flachleiterkerns 62, so dass sich die Strecken 72a-b jeweils über mindestens 75 % der Höhe Hk des Flachleiterkerns 62 erstrecken. Auch auf diese Weise wird eine ausreichend große Anlagefläche für ein Biegewerkzeug geschaffen, so dass eine lokale Überlastung und Beschädigung der Isolierung 64 vermieden werden kann.

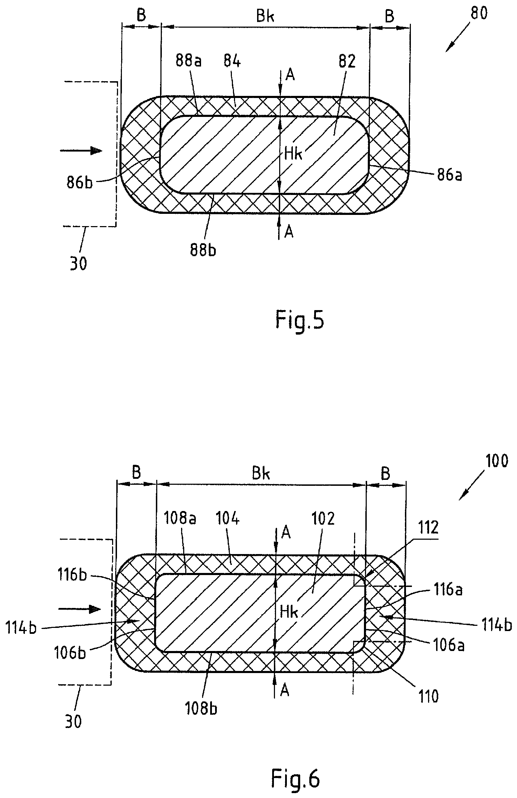

Fig. 5 zeigt ein Ausführungsbeispiel eines Flachleiters 80 gemäß der Lehre der vorliegenden Erfindung. Der Flachleiter 80 weist einen Flachleiterkern 82 aus leitfähigem Flachleitermaterial sowie eine den Flachleiterkern 82 ummantelnde Isolierung 84 aus einem Isolierstoff wie zum Beispiel Polyvinylchlorid auf. Die Höhe Hk des Flachleiterkerns 82 ist geringer als die Breite Bk des Flachleiterkerns 82. Der Flachleiterkern 82 weist einen im Wesentlichen rechteckigen Querschnitt mit zwei Schmalseiten 86a-b und zwei Breitseiten 88a-b auf.

Da die Schmalseiten 86a-b eine geringere Fläche aufweisen als die Breitseiten 88a-b, treten bei Biegeumformungen um die Schmalseiten 86a-b an diesen größere Kräfte pro Fläche, d.h. größere Biegedrücke, auf als an den Breitseiten 88a-b bei Biegeumformungen um die Breitseiten 88a-b.

Die Isolierung 84 des Flachleiters 80 weist an den Schmalseiten 86a-b des Flachleiterkerns 82 (Wandstärke B) eine größere Wandstärke auf als an den Breitseiten 88a-b des Flachleiterkerns 82 (Wandstärke A). Auf diese Weise wird die Isolierung 84 an den Schmalseiten 86a-b gezielt verstärkt und damit an die dort auftretenden höheren Biegedrücken bei Biegeumformungen um die Schmalseiten 86a-b angepasst. Dadurch kann verhindert werden, dass die Isolierung 84 im Bereich der Schmalseiten 86a-b bei einer solchen Biegeumformung beschädigt wird.

Fig. 6 zeigt ein Ausführungsbeispiel eines elektrischen Flachleiters 100 gemäß der Lehre der vorliegenden Erfindung. Bei diesem Flachleiter 100 werden die erste und die zweite Lehre der vorliegenden Erfindung in synergetisch vorteilhafter Weise miteinander verbunden.

Der Flachleiter 100 weist einen Flachleiterkern 102 und eine diesen ummantelnde Isolierung 104 auf, wobei der Flachleiterkern 102 einen im Wesentlichen rechteckigen Querschnitt mit zwei Schmalseiten 106a-b, zwei Breitseiten 108a-b und gerundeten Ecken 110 aufweist. Die Schmalseiten 106a-b weisen Teilflächen 114a-b auf, deren Konturen im Querschnitt in Fig. 6 jeweils eine gerade Strecke 116a-b bilden.

Die Rundungsradien 112 der gerundeten Ecken 110 entsprechen jeweils maximal einem Achtel der Höhe Hk des Flachleiterkerns 102, so dass sich die Strecken 116a-b über mindestens 75 % der Höhe Hk des Flachleiterkerns 102 erstrecken. Auf diese Weise wird eine ausreichend große Anlagefläche für ein Biegewerkzeug 30 zur Verfügung gestellt, so dass die von dem Biegewerkzeug 30 übertragenen Kräfte auf eine ausreichend große Fläche verteilt werden und es zu keiner lokalen Überlastung der Isolierung 104 kommt. Weiterhin wird auf diese Weise erreicht, dass der Flachleiterkern 102 bei gleicher Breite Bk eine größere Querschnittsfläche aufweist als es beispielsweise bei dem Flachleiterkern 22 des Flachleiters 20 in Fig. 2 der Fall ist, bei dem die entsprechende gerade Strecke der Kontur der Schmalseiten sich über einen erheblich geringeren Teil der Flachleiterkernhöhe Hk erstreckt.

So ist die Querschnittsfläche Q eines Flachleiterkerns der Höhe Hk und der Breite Bk mit einem im Wesentlichen rechteckigen Querschnitt mit abgerundeten Ecken mit Rundungsradius R durch folgende Formel gegeben: Q = Hk · Bk - (4 - π) · R². Entsprechend kann eine für eine vorgegebene Querschnittsfläche Q bei einem geringeren Rundungsradius R auch eine entsprechend geringere Breite Bk gewählt werden gemäß der Formel: Bk = (Q + (4 - π) · R²)/Hk.

Damit kann der Flachleiterkern 102 mit einer geringeren Breite Bk ausgebildet werden, ohne dass sich die Querschnittsfläche Q des Flachleiterkerns 102 gegenüber der Querschnittsfläche des Flachleiters 20 aus Fig. 2 reduziert. Der dadurch frei werdende Raum im Bereich der Schmalseiten 106a-b des Flachleiterkerns 102 kann nun in vorteilhafter Weise für eine Vergrößerung der Wandstärke der Isolierung 104 im Bereich der Schmalseiten 106a-b genutzt werden, so dass die Wandstärke B im Bereich der Schmalseiten 106a-b größer ist als die Wandstärke A im Bereich der Breitseiten 108a-b. Auf diese Weise kann eine gezielte Verstärkung der Isolierung 104 im Bereich der beanspruchten Schmalseiten 106a-b erreicht werden, ohne dass sich die äußeren Dimensionen des Flachleiters 100 gegenüber den Dimensionen des Flachleiters 20 aus Fig. 2 erhöhen.

Durch die Lehre der vorliegenden Erfindung bei einem Flachleiter kann damit bei unverändertem Bauraum gegenüber dem Flachleiter 20 aus Fig. 2 ein stabiler Flachleiter 100 zur Verfügung gestellt werden, der insbesondere hinsichtlich einer Biegeumformung um eine seiner Schmalseiten verbessert ist. Die Merkmale der Lehre der vorliegenden Erfindung wirken bei dem Flachleiter 100 damit synergetisch in vorteilhafter Weise zusammen.

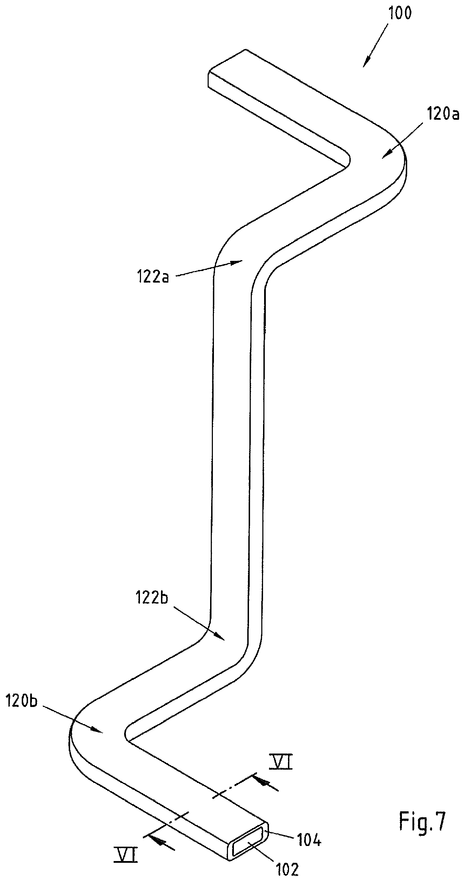

Fig. 7 zeigt den Flachleiter 100 aus Fig. 6 nach einer dreidimensionalen Biegeumformung. Der Querschnitt aus Fig. 6 ist in Fig. 7 durch die Schnittebene VI angedeutet. Der Flachleiter 100 weist mehrere Biegungen 120a-b, 122a-b auf, die mittels eines oder mehrerer Biegewerkzeuge in den Flachleiter 100 eingebracht wurden. An den Biegungen 120a-b sind der Flachleiter 100 und damit entsprechend auch der Flachleiterkern 102 jeweils um eine Schmalseite gebogen. An den Biegungen 122a-b sind Flachleiter 100 bzw. Flachleiterkern 102 jeweils um eine Breitseite gebogen. Durch die Ausgestaltung des Flachleiters 100, wie sie im Zusammenhang mit der Fig. 6 beschrieben wurde, wird insbesondere das Einbringen der Biegungen 120ab erleichert, da der Flachleiter eine stabilere Struktur für Biegungen 120a-b um eine Schmalseite aufweist als beispielsweise der Flachleiter 20 aus Fig. 2 und das Risiko einer Beschädigung der Isolierung 104 beim Biegen um eine Schmalseite erheblich reduziert wird.

## Patentansprüche

1. Elektrischer Flachleiter (40, 60, 80, 100) für Kraftfahrzeuge
- mit einem Flachleiterkern (42,62,82, 102) aus elektrisch leitfähigem Flachleitermaterial und
- mit einer den Flachleiterkern (42, 62, 82, 102) ummantelnden Isolierung (44, 64, 84, 104) aus einem Isolierstoff,
- wobei die Höhe (Hk) des Flachleiterkerns (42, 62, 82, 102) geringer ist als die Breite (Bk) des Flachleiterkerns,
- wobei der Flachleiterkern (42, 62, 82, 102) mindestens eine Schmalseite (46a-b, 68a-b, 86a-b, 106a-b) aufweist, die die Breite des Flachleiterkerns (42, 62, 82, 102) zu einer Seite hin begrenzt und
- wobei die mindestens eine Schmalseite (46a-b, 68a-b, 86a-b, 106a-b) des Flachleiterkerns (42, 62, 82, 102) zumindest abschnittsweise über die Länge des Flachleiters (40, 60, 80, 100) eine Teilfläche (52a-b, 70a-b, 114a-b) aufweist, deren Kontur im Querschnitt des Flachleiterkerns (42, 62, 82, 102) eine gerade Strecke (46a-b, 54a-b, 72a-b, 116a-b) bildet, die sich über einen Teil der Höhe des Flachleiterkerns (42,62,82, 102) erstreckt,
**dadurch gekennzeichnet,**
- **dass** der Flachleiter (40,60,80, 100) mindestens eine Biegung (120a, 120b) um die mindestens eine Schmalseite (46a-b, 68a-b, 86a-b, 106a-b) des Flachleiterkerns (42, 62, 82, 102) aufweist und
- **dass** sich die gerade Strecke (46a-b, 54a-b, 72a-b, 116a-b) über mindestens 75% und über maximal 90% der Höhe des Flachleiterkerns (42,62,82, 102) erstreckt.

2. Elektrischer Flachleiter nach Anspruch 1,
**dadurch gekennzeichnet,**
- **dass** der Flachleiterkern (42, 62, 82, 102) mindestens eine Breitseite (48a-b, 88ab, 108a-b) aufweist, die die Höhe des Flachleiterkerns (42, 62, 82, 102) zu einer Seite hin begrenzt, und
- **dass** die Teilfläche der mindestens einen Schmalseite (46a-b, 68a-b, 86a-b, 106ab) des Flachleiterkerns (42, 62, 82, 102) im Wesentlichen senkrecht zu der mindestens einen Breitseite (48a-b, 88a-b, 108a-b) des Flachleiterkerns (42, 62, 82, 102) verläuft.

3. Elektrischer Flachleiter nach Anspruch 1 oder 2,
**dadurch gekennzeichnet,**
**dass** sich die Teilfläche (52a-b, 70a-b, 114a-b) der mindestens einen Schmalseite (46a-b, 68a-b, 86a-b, 106a-b) im Wesentlichen über die gesamte Länge des Flachleiters (40, 60, 80, 100) erstreckt.

4. Elektrischer Flachleiter nach einem der Ansprüche 1 bis 3,
**dadurch gekennzeichnet,**
**dass** der Flachleiterkern zwei Schmalseiten (46a-b, 68a-b, 86a-b, 106a-b) und zwei Breitseiten (48a-b, 88a-b, 108a-b) und einen im Wesentlichen rechteckigen Querschnitt aufweist.

5. Elektrischer Flachleiter nach Anspruch 4,
**dadurch gekennzeichnet,**
**dass** der Flachleiterkern (42, 62,82, 102) einen im Wesentlichen rechteckigen Querschnitt mit abgerundeten Ecken (50, 64, 66, 110) aufweist, wobei die Rundungsradien der abgerundeten Ecken (50, 64, 66, 110) an mindestens einer Schmalseite (46a-b, 68a-b, 86a-b, 106a-b) des Flachleiterkerns (42, 62, 82, 102) jeweils maximal ein Achtel der Höhe (Hk) des Flachleiterkerns (42, 62, 82, 102) betragen.

6. Elektrischer Flachleiter (40, 60, 80, 100) für Kraftfahrzeuge, nach einem der Ansprüche 1 bis 5,
**dadurch gekennzeichnet,**
- **dass** die Isolierung (44, 64, 84, 104) zumindest abschnittsweise über die Länge des Flachleiters (40, 60, 80, 100) an mindestens einer Seite (46a-b, 48a-b, 68a-b, 86a-b, 88a-b, 106a-b, 108a-b) des Flachleiterkerns (42, 62, 82, 102) eine größere Wandstärke aufweist als an mindestens einer anderen Seite (46a-b, 48a-b, 68a-b, 86a-b, 88a-b, 106a-b, 108a-b) des Flachleiterkerns (42, 62, 82, 102).

7. Elektrischer Flachleiter nach Anspruch 6,
**dadurch gekennzeichnet,**
- **dass** der Flachleiterkern (42, 62, 82, 102) mindestens eine Breitseite (48a-b, 88ab, 108a-b) aufweist, die die Höhe (Hk) des Flachleiterkerns (42, 62, 82, 102) zu einer Seite hin begrenzt und
- **dass** die Isolierung (44, 64, 84, 104) an der mindestens einen Schmalseite (46a-b, 68a-b, 86a-b, 106a-b) des Flachleiterkerns (42, 62, 82, 102) eine größere Wandstärke aufweist als an der mindestens einen Breitseite (48a-b, 88a-b, 108ab) des Flachleiterkerns (42, 62, 82, 102).

8. Elektrischer Flachleiter nach Anspruch 6 oder 7,
**dadurch gekennzeichnet,**
**dass** die Wandstärke der Isolierung (44, 64, 84, 104) an der mindestens einen Seite (46a-b, 48a-b, 68a-b, 86a-b, 88a-b, 106a-b, 108a-b) des Flachleiterkerns (42,62, 82, 102) mindestens 10 %, vorzugsweise mindestens 20 %, insbesondere mindestens 25 % größer ist als an der mindestens einen anderen Seite (46a-b, 48a-b, 68a-b, 86a-b, 88a-b, 106a-b, 108a-b) des Flachleiterkerns (42,62,82, 102).

9. Elektrischer Flachleiter nach einem der Ansprüche 6 bis 8,
**dadurch gekennzeichnet,**
**dass** die Isolierung (44, 64, 84, 104) im Wesentlichen über die gesamte Länge des Flachleiters (40, 60, 80, 100) an der mindestens einen Seite (46a-b, 48a-b, 68a-b, 86a-b, 88a-b, 106a-b, 108a-b) des Flachleiterkerns (42, 62, 82, 102) eine größere Wandstärke aufweist als an der mindestens einen anderen Seite (46a-b, 48a-b, 68a-b, 86a-b, 88a-b, 106a-b, 108a-b) des Flachleiterkerns (42, 62, 82, 102).

10. Elektrischer Flachleiter nach einem der Ansprüche 6 bis 9,
**dadurch gekennzeichnet,**
**dass** der Flachleiterkern (42, 62, 82, 102) zwei Schmalseiten (46a-b, 68a-b, 86a-b, 106a-b) und zwei Breitseiten (48a-b, 88a-b, 108a-b) und einen im Wesentlichen rechteckigen Querschnitt aufweist.

11. Elektrischer Flachleiter nach einem der Ansprüche 1 bis 10,
**dadurch gekennzeichnet,**
**dass** die Höhe (Hk) des Flachleiterkerns (42, 62, 82, 102) maximal 2,5 mm, vorzugsweise maximal 2 mm beträgt.

12. Elektrischer Flachleiter nach einem der Ansprüche 1 bis 11,
**dadurch gekennzeichnet,**
**dass** das Verhältnis der Höhe (Hk) des Flachleiterkerns (42, 62, 82, 102) zur Breite (Bk) des Flachleiterkerns (42, 62, 82, 102) zwischen 1:2 und 1:15, insbesondere zwischen 1:5 und 1:10 liegt.

## Claims

1. Electrical flat conductor (40, 60, 80, 100) for motor vehicles,
- with a flat conductor core (42, 62, 82, 102) of electrically conductive flat conductor material and
- with an insulation of an insulating material encasing the flat conductor core (42, 62, 82, 102),
- wherein the height (Hk) of the flat conductor core (42, 62, 82, 102) is less than the width (Bk) of the flat conductor core,
- wherein the flat conductor core (42,62,82, 102) has at least one narrow side (46a-b, 68a-b, 86a-b, 106a-b), which limits the width of the flat conductor core (42, 62, 82, 102) on one side and
- wherein the at least one narrow side (46a-b, 68a-b, 86a-b, 106a-b) of the flat conductor core (42, 62, 82,102) has at least in sections over the length of the flat conductor (40, 60, 80, 100) a partial surface (52a-b, 70a-b, 114a-b), whose contour in the cross-section of the flat conductor core (42, 62, 82, 102) forms a straight section (46a-b, 54a-b, 72a-b, 116a-b), which extends over a part of the height of the flat conductor core (42, 62, 82, 102),
**characterised in**
- **that** the flat conductor (40, 60, 80, 100) has at least one bend (120a, 120b) around the at least one narrow side (46a-b, 68a-b, 86a-b, 106a-b) of the flat conductor core (42, 62, 82, 102) and
- **that** the straight section (46a-b, 54a-b, 72a-b, 116a-b) extends over at least 75% and over at most 90% of the height of the flat conductor core (42, 62, 82, 102).

2. Electrical flat conductor according to Claim 1,
**characterised in**
- **that** the flat conductor core (42, 62, 82, 102) has at least one broad side (48a-b, 88a-b, 108a-b), which limits the height of the flat conductor core (42, 62, 82, 102) on one side, and
- **that** the partial surface of the at least one narrow side (46a-b, 68a-b, 86a-b, 106a-b) of the flat conductor core (42, 62, 82, 102) extends substantially perpendicular to the at least one broad side (48a-b, 88a-b, 108a-b) of the flat conductor core (42, 62, 82, 102).

3. Electrical flat conductor according to Claim 1 or 2,
**characterised in**
**that** the partial surface (52a-b, 70a-b, 114a-b) of the at least one narrow side (46a-b, 68a-b, 86a-b, 106a-b) extends substantially over the whole length of the flat conductor (40, 60, 80, 100).

4. Electrical flat conductor according to any one of Claims 1 to 3,
**characterised in**
**that** the flat conductor core has two narrow sides (46a-b, 68a-b, 86a-b, 106a-b) and two broad sides (48a-b, 88a-b, 108a-b) and a substantially rectangular cross-section.

5. Electrical flat conductor according to Claim 4,
**characterised in**
**that** the flat conductor core (42, 62, 82, 102) has a substantially rectangular cross-section with rounded corners (50, 64, 66, 110), wherein the radii of curvature of the rounded corners (50, 64, 66, 110) on at least one narrow side (46a-b, 68a-b, 86a-b, 106a-b) of the flat conductor core (42, 62, 82, 102) are in each case at most one eighth of the height (Hk) of the flat conductor core (42, 62, 82, 102).

6. Electrical flat conductor (40, 60, 80, 100) for motor vehicles, according to any one of Claims 1 to 5,
**characterised in**
- **that** the insulation (44, 64, 84, 104) at least in sections over the length of the flat conductor (40, 60, 80, 100) on at least one side (46a-b, 48a-b, 68a-b, 86a-b, 88a-b, 106a-b, 108a-b) of the flat conductor core (42, 62, 82, 102) has a greater wall thickness than on at least one other side (46a-b, 48a-b, 68a-b, 86a-b, 88a-b, 106a-b, 108a-b) of the flat conductor core (42, 62, 82, 102).

7. Electrical flat conductor according to Claim 6,
**characterised in**
- **that** the flat conductor core (42, 62, 82, 102) has at least one broad side (48a-b, 88a-b, 108a-b), which limits the height (Hk) of the flat conductor core (42, 62, 82, 102) on one side, and
- **that** the insulation (44, 64, 84, 104) on the at least one narrow side (46a-b, 68a-b, 86a-b, 106a-b) of the flat conductor core (42, 62, 82, 102) has a greater wall thickness than on the at least one broad side (48a-b, 88a-b, 108a-b) of the flat conductor core (42, 62, 82, 102).

8. Electrical flat conductor according to Claim 6 or 7,
**characterised in**
**that** the wall thickness of the insulation (44, 64, 84, 104) on the at least one side (46a-b, 48a-b, 68a-b, 86a-b, 88a-b, 106a-b, 108a-b) of the flat conductor core (42, 62, 82, 102) is at least 10%, preferably at least 20%, in particular at least 25% greater than on the at least one other side (46a-b, 48a-b, 68a-b, 86a-b, 88a-b, 106a-b, 108a-b) of the flat conductor core (42, 62, 82, 102).

9. Electrical flat conductor according to any one of Claims 6 to 8,
**characterised in**
**that** the insulation (44, 64, 84, 104) substantially over the whole length of the flat conductor (40, 60, 80, 100) on the at least one side (46a-b, 48a-b, 68a-b, 86a-b, 88a-b, 106a-b, 108a-b) of the flat conductor core (42, 62, 82, 102) has a greater wall thickness than on the at least one other side (46a-b, 48a-b, 68a-b, 86a-b, 88a-b, 106a-b, 108a-b) of the flat conductor core (42, 62, 82, 102).

10. Electrical flat conductor according to any one of Claims 6 to 9,
**characterised in**
**that** the flat conductor core (42, 62, 82, 102) has two narrow sides (46a-b, 68a-b, 86a-b, 106a-b) and two broad sides (48a-b, 88a-b, 108a-b) and a substantially rectangular cross-section.

11. Electrical flat conductor according to any one of Claims 1 to 10,
**characterised in**
**that** the height (Hk) of the flat conductor core (42, 62, 82,102) is at most 2.5 mm, preferably at most 2 mm.

12. Electrical flat conductor according to any one of Claims 1 to 11,
**characterised in**
**that** the ratio of the height (Hk) of the flat conductor core (42, 62, 82, 102) to the width (Bk) of the flat conductor core (42, 62, 82, 102) is between 1:2 and 1:15, in particular between 1:5 and 1:10.

## Revendications

1. Conducteur plat électrique (40, 60, 80, 100) pour des véhicules automobiles,
- avec un noyau de conducteur plat (42, 62, 82, 102) en un matériau de conducteur plat électriquement conducteur et
- avec une isolation (44, 64, 84, 104) enveloppant le noyau de conducteur plat (42, 62, 82, 102) et constituée d'un matériau isolant,
- la hauteur (Hk) du noyau de conducteur plat (42, 62, 82, 102) étant inférieure à la largeur (Bk) du noyau de conducteur plat,
- le noyau de conducteur plat (42, 62, 82, 102) présentant au moins un côté étroit (46a-b, 68a-b, 86a-b, 106a-b) qui délimite la largeur du noyau de conducteur plat (42, 62, 82, 102) d'un côté, et
- l'au moins un côté étroit (46a-b, 68a-b, 86a-b, 106a-b) du noyau de conducteur plat (42, 62, 82, 102) présentant, au moins par section, sur la longueur du conducteur plat (40, 60, 80, 100), une surface partielle (52a-b, 70a-b, 114a-b), dont le contour en section transversale du noyau de conducteur plat (42, 62, 82, 102) forme un trajet rectiligne (46a-b, 54a-b, 72a-b, 116a-b) qui s'étend sur une partie de la hauteur du noyau de conducteur plat (42, 62, 82, 102),
**caractérisé en ce que**
- le conducteur plat (40, 60, 80, 100) présente au moins une courbure (120a, 120b) autour du au moins un côté étroit (46a-b, 68a-b, 86a-b, 106a-b) du noyau de conducteur plat (42, 62, 82, 102) et
- le trajet rectiligne (46a-b, 54a-b, 72a-b, 116a-b) s'étend sur au moins 75 % et sur au maximum 90 % de la hauteur du noyau de conducteur plat (42, 62, 82, 102).

2. Conducteur plat électrique selon la revendication 1,
**caractérisé en ce que**
- le noyau de conducteur plat (42, 62, 82, 102) présente au moins un côté large (48a-b, 88a-b, 108a-b) qui délimite la hauteur du noyau de conducteur plat (42, 62, 82, 102) d'un côté, et
- la surface partielle du au moins un côté étroit (46a-b, 68a-b, 86a-b, 106a-b) du noyau de conducteur plat (42, 62, 82, 102) passe principalement perpendiculairement par rapport au au moins un côté large (48a-b, 88a-b, 108a-b) du noyau de conducteur plat (42, 62, 82, 102).

3. Conducteur plat électrique selon la revendication 1 ou 2,
**caractérisé en ce que**
la surface partielle (52a-b, 70a-b, 114a-b) du au moins un côté étroit (46a-b, 68a-b, 86a-b, 106a-b) s'étend principalement sur la longueur entière du conducteur plat (40, 60, 80, 100).

4. Conducteur plat électrique selon l'une des revendications 1 à 3,
**caractérisé en ce que**
le noyau de conducteur plat présente deux côtés étroits (46a-b, 68a-b, 86a-b, 106a-b) et deux côtés larges (48a-b, 88a-b, 108a-b) et une section transversale principalement rectangulaire.

5. Conducteur plat électrique selon la revendication 4,
**caractérisé en ce que**
le noyau de conducteur plat (42, 62, 82, 102) présente une section transversale principalement rectangulaire avec des coins arrondis (50, 64, 66, 110), les rayons de courbure des coins arrondis (50, 64, 66, 110) sur au moins un côté étroit (46a-b, 68a-b, 86a-b, 106a-b) du noyau de conducteur plat (42, 62, 82, 102) s'élèvent respectivement au maximum à un huitième de la hauteur (Hk) du noyau de conducteur plat (42, 62, 82, 102).

6. Conducteur plat électrique (40, 60, 80, 100) pour véhicules automobiles selon l'une des revendications 1 à 5,
**caractérisé en ce que**
- l'isolation (44, 64, 84, 104) présente, au moins par section, sur la longueur du conducteur plat (40, 60, 80, 100), sur au moins un côté (46a-b, 48a-b, 68a-b, 86a-b, 88a-b, 106a-b, 108a-b) du noyau de conducteur plat (42, 62, 82, 102), une plus grande épaisseur de paroi que sur au moins un autre côté (46a-b, 48a-b, 68a-b, 86a-b, 88a-b, 106a-b, 108a-b) du noyau de conducteur plat (42, 62, 82, 102).

7. Conducteur plat électrique selon la revendication 6,
**caractérisé en ce que**
- le noyau de conducteur plat (42, 62, 82, 102) présente au moins un côté large (48a-b, 88a-b, 108a-b) qui délimite la hauteur (Hk) du noyau de conducteur plat (42, 62, 82, 102) d'un côté, et
- l'isolation (44, 64, 84, 104) présente sur l'au moins un côté étroit (46a-b, 68a-b, 86a-b, 106a-b) du noyau de conducteur plat (42, 62, 82, 102) une plus grande épaisseur de paroi que sur l'au moins un côté large (48a-b, 88a-b, 108a-b) du noyau de conducteur plat (42, 62, 82, 102).

8. Conducteur plat électrique selon la revendication 6 ou 7,
**caractérisé en ce que**
l'épaisseur de paroi de l'isolation (44, 64, 84, 104), sur l'au moins un côté (46a-b, 48a-b, 68a-b, 86a-b, 88a-b, 106a-b, 108a-b) du noyau de conducteur plat (42, 62, 82, 102) est au moins 10 %, de préférence au moins 20 %, notamment au moins 25 % supérieure que sur l'au moins un autre côté (46a-b, 48a-b, 68a-b, 86a-b, 88a-b, 106a-b, 108a-b) du noyau de conducteur plat (42, 62, 82, 102).

9. Conducteur plat électrique selon l'une des revendications 6 à 8,
**caractérisé en ce que**
l'isolation (44, 64, 84, 104) présente, principalement sur la longueur entière du conducteur plat (40, 60, 80, 100), sur l'au moins un côté (46a-b, 48a-b, 68a-b, 86a-b, 88a-b, 106a-b, 108a-b) du noyau de conducteur plat (42, 62, 82, 102), une plus grande épaisseur de paroi que sur l'au moins un autre côté (46a-b, 48a-b, 68a-b, 86a-b, 88a-b, 106a-b, 108a-b) du noyau de conducteur plat (42, 62, 82, 102).

10. Conducteur plat électrique selon l'une des revendications 6 à 9,
**caractérisé en ce que**
le noyau de conducteur plat (42, 62, 82, 102) présente deux côtés étroits (46a-b, 68a-b, 86a-b, 106a-b) et deux côtés larges (48a-b, 88a-b, 108a-b) et une section transversale principalement rectangulaire.

11. Conducteur plat électrique selon l'une des revendications 1 à 10,
**caractérisé en ce que**
la hauteur (Hk) du noyau de conducteur plat (42, 62, 82, 102) s'élève au maximum à 2,5 mm, de préférence au maximum à 2 mm.

12. Conducteur plat électrique selon l'une des revendications 1 à 11,
**caractérisé en ce que**
le rapport de la hauteur (Hk) du noyau de conducteur plat (42, 62, 82, 102) à la largeur (Bk) du noyau de conducteur plat (42, 62, 82, 102) se situe entre 1:2 et 1:15, notamment entre 1:5 et 1:10.
